# EUROPEAN PATENT APPLICATION

(11) **EP 2 571 084 A2**
(43) Date of publication of application: **20.03.2013**
(21) Application number: 11780792.5
(22) Date of filing: 11.05.2011
(51) Int. Cl.: H01M 4/583, H01M 4/38, H01M 4/48, H01M 10/0525

(54) **ANODE ACTIVE MATERIAL FOR A LITHIUM SECONDARY BATTERY, METHOD FOR PREPARING SAME, AND LITHIUM SECONDARY BATTERY INCLUDING SAME**

(30) Priority: 11.05.2010 KR 20100043798
(71) Applicant: Route JJ Co., Ltd, Siheung-si, Gyeonggi-do 429-450 (KR)
(72) Inventor: HONG, Ji Jun, Seoul 135-240 (KR); BYUN, Ki Taek, Seoul 157-839 (KR); KIM, Hyo Won, Siheung-si Gyeonggi-do 429-450 (KR)
(74) Representative: Jell, Friedrich
(86) International application number: PCT/KR2011/003453
(87) International publication number: WO 2011/142575

(57) **Abstract**

Provided are an anode active material for a lithium secondary battery, a method for preparing same, and a lithium secondary battery including same. An anode active material for a lithium secondary battery according to the present invention includes: active particles by means of which lithium ions may be absorbed/released; and a coating layer coated on the surface of the active particles, wherein the coating layer includes a first material which is a hollow nanofiber and a second material which is a carbon precursor or LTO. When silicon is used as an anode active material for a lithium secondary battery, cracks are generated and active material particles are destroyed due to a change in volume, through the reaction with lithium ions during charging/discharging. However, the anode active material for a lithium secondary battery of the present invention may prevent the capacity from being radically reduced as the charge/discharge cycle proceeds, thereby extending cycle life, and thus achieving a high energy density appropriate for a high-capacity battery.

## Description

The present invention relates to an anode active material for a lithium secondary battery, a method for preparing same, and a lithium secondary battery including same, and more particularly, the present invention relates to an anode active material for a lithium secondary battery, a method for preparing same, and a lithium secondary battery including same, wherein a rapid decrease of a capacity as charging/discharging cycle progressed due to the volume change by the reaction with lithium during charging/discharging and the generation of cracks and the breakage of active material particles, may be prevented, the cycle lifetime may be prolonged, and a high energy density appropriate for a high-capacity battery may be confirmed.

Recently, demands on lithium secondary batteries have been largely increased as an electric power and a power source of portable small-sized electronic devices such as a cellular phone, a portable personal digital assistant (PDA), a notebook personal computer (PC), MP3, etc. and an electric vehicle. Accordingly, demands on the lithium secondary batteries having a high-capacity and a prolonged lifetime also have been increased.

As an anode active material of a lithium secondary battery, carbon-based materials have been widely used. However, the carbon-based anode active material has a limited theoretical maximum capacity of 372 mAh/g and has serious lifetime deterioration problem. Accordingly, a lot of researches and suggestions on a lithium alloy material having a high-capacity and being possibly replaced with the lithium metal have been conducted. One method among these is concerned with an application of silicon (Si).

Generally, silicon reversibly absorbs/releases lithium through a compound forming reaction with lithium. The theoretical maximum capacity of the silicon is about 4,020 mAh/g (9,800 mAh/cc) and is very large when comparing with the carbon-based material. Thus, the silicon has been a promising material as the anode material having a high-capacity. However, cracks may be generated due to the volume change of the silicon active material through the reaction with lithium during charging/discharging, and due to the breakage of the silicon active material particles, the capacity may be rapidly decreased as the charging/discharging cycle proceeds, and the cycle lifetime may be shortened.

Accordingly, developments on an anode active material having an appropriate energy density for a high-capacity battery, having an excellent stability and safety, keeping good battery properties, and having a long cycle lifetime, and an economic method for preparing the anode active material are required. A method of using silicon with graphite after pulverizing mechanically, or a method of mixing silicon with a carbon material and then calcining has been suggested. When the graphite is added into the silicon, the capacity may be decreased however, the cycle lifetime may be remarkably enhanced. However, an anode active material for a secondary battery including silicon along with hollow nanofiber type carbon, and lithium titanium oxide (LTO) or a carbon-based material, at the same time, and a method for preparing the anode active material have not been suggested.

Accordingly, an object of the present invention is to provide an anode active material for a lithium secondary battery and a precursor thereof, having an improved electric conductivity, energy density, stability, safety and cycle lifetime property.

Another object of the present invention is to provide a method for preparing the anode active material for the lithium secondary battery.

Further another object of the present invention is to provide a lithium secondary battery including the anode active material for the lithium secondary battery.

According to example embodiments, an anode active material for a lithium secondary battery is provided. The active material includes active particles for absorbing/releasing a lithium ion, and a coating layer coated on a surface of the active particles. The coating layer includes a first material of a hollow nanofiber and a second material of a carbon precursor or lithium titanium oxide (LTO).

The active particle may be one selected from the group consisting of silicon, silicon oxide, a metal, a metal oxide and a mixture thereof. In this case, the metal may be at least one selected from the group consisting of Sn, Al, Pb, Zn, Bi, In, Mg, Ga, Cd, Ag, Pt, Pd, Ir, Rh, Ru, Ni, Mo, Cr, Cu, Ti, W, Co, V and Ge.

The hollow nanofiber may be hollow nanofiber type carbon, and may be one of a single-wall carbon nanotube, a multi-wall carbon nanotube, a carbon nanofiber, graphene and a mixture thereof.

The carbon precursor may be at least one of glucose, sucrose, polyethylene glycol, polyvinyl alcohol, polyvinyl chloride and citric acid, and the carbon precursor preferably may be at least one selected from the group consisting of the glucose, the sucrose and the citric acid.

The diameter of the hollow nanofiber type carbon may be 2 nm to 100 nm, and a complex anode active material coated with the second material of the carbon precursor or the LTO and the first material of the hollow nanofiber type carbon may be a crystal having a mean diameter of a primary particle of 5 nm to 400 nm and a mean diameter of a secondary particle of 3 µm to 30 µm.

According to other example embodiments, a method for preparing an anode active material for a lithium secondary battery is provided. The method includes (a) preparing a dispersion by mixing and dispersing active particles for an anode active material, a carbon precursor and a hollow nanofiber type carbon in an aqueous solution, and (b) uniformly coating a surface of the active particles with a coating layer including the hollow nanofiber type carbon and the carbon precursor by stirring a reaction system in a reactor or by applying a sonochemical treatment to the reaction system. The sonochemical treatment may be performed under a multibubble sonoluminescence (MBSL) condition.

The method may further include drying thus obtained product after coating and calcining the dried product under an inert gas atmosphere to obtain a complex anode active material. The amount of the hollow nanofiber type carbon in the dispersion at step (a) may be in a range of 0.5 to 8 wt% based on a total amount of the dispersion. The dispersing for preparing the dispersion at step (a) may be performed by using one of a sonic wave dispersing method and a high pressure dispersion method.

The coating at step (b) may be performed under an inert gas atmosphere at a temperature range of 10°C to 50°C, and the calcining may be performed under an inert gas atmosphere at a temperature range of 500°C to 900°C.

According to further other example embodiments, a lithium secondary battery including the above-described anode active material for a lithium secondary battery is provided.

The anode active material for the lithium secondary battery in accordance with example embodiments may prevent a rapid decrease of a capacity as charging/discharging cycle progressed due to the volume change by the reaction with lithium during charging/discharging and the generation of cracks and the breakage of active material particles, which may be generated for a silicon anode active material. Thus, the cycle lifetime may be prolonged, and a high energy density appropriate for a high-capacity battery may be confirmed. Therefore, the lithium secondary battery obtained by using the anode active material for the lithium secondary battery in accordance with the present invention may keep a good fundamental electric property, may improve the stability and the safety and may increase the cycle lifetime. In addition, according to the method for preparing the complex anode active material for the lithium secondary battery of the present invention, the complex anode active material may be prepared with a good reproducibility and productivity.

### BRIEF DESCRIPTION OF THE DRAWINGS

FIG. 1 is a schematic cross-sectional view of an anode active material for a lithium secondary battery obtained by Example 1.
FIG. 2 is a schematic cross-sectional view of an anode active material for a lithium secondary battery obtained by Example 2.
FIG. 3 is a flow chart for explaining a preparing method of an anode active material obtained from Example 1 through a wet process.
FIG. 4 is a flow chart for explaining a preparing method of an anode active material obtained from Example 2 through a wet process.
FIG. 5 illustrates analysis results on a complex anode active material for a lithium secondary battery obtained from Example 1 by means of a field emission scanning electron microscope (FE-SEM).
FIG. 6 illustrates analysis results on a complex anode active material for a lithium secondary battery obtained from Example 2 by means of a field emission scanning electron microscope (FE-SEM).
FIG. 7 is a graph illustrating charging/discharging results of anode active materials for a lithium secondary battery obtained by example embodiments.

An anode active material for a lithium secondary battery in accordance with example embodiments includes a core and a coating layer coating the core, and the coating layer includes a first material of a hollow nanofiber and a second material to be mixed with the first material. In example embodiments, the core may be silicon, a metal or a metal oxide, a mixture thereof and an alloy thereof, which may absorb/release lithium ions. In addition, the second material may be a carbon-based material in accordance with an example embodiment and may be lithium titanium oxide (LTO, Li₄Ti₅O₁₂) in accordance with another example embodiment.

According to example embodiments, an anode active material is divided into a core and a coating layer. The coating layer includes a fiber (first material) having a hollow structure, which is a moving passage of lithium ions and a material (second material) possibly minimizing the particle size of the active material and the volume change due to the reaction with the lithium ions, at the same time. Thus, a rapid decrease of a capacity as charging/discharging cycle progressed due to the volume change by the reaction with lithium during charging/discharging and the generation of cracks and the breakage of active material particles may be prevented. In addition, the coating layer in accordance with example embodiments may be formed by coating the first material and the second material at the same time and so, may be coated on a metal oxide core. Therefore, the present invention is economic.

Hereinafter, the present invention will be described in more detail referring to example embodiments.

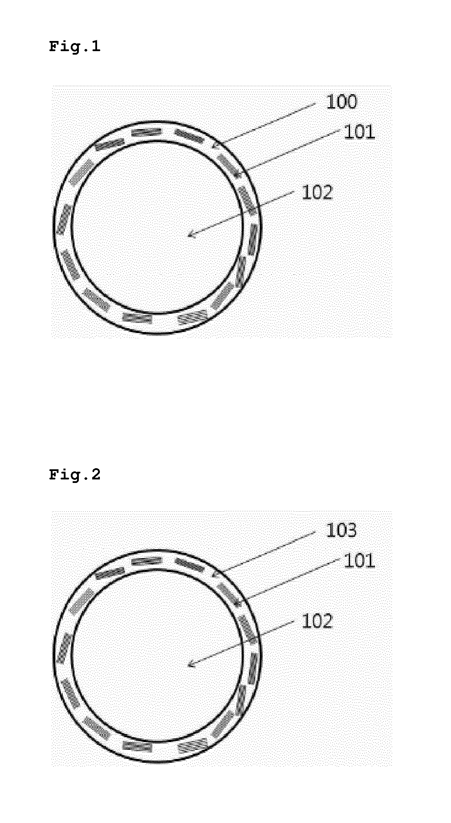

FIGS. 1 and 2 illustrate a schematic cross-sectional view of a complex anode active material precursor for a lithium secondary battery or a complex anode active material for a lithium secondary battery in accordance with example embodiments.

Referring to FIGS. 1 and 2, an active particle 102, which is a core, and a coating layer coating the active particle 102 are illustrated. The coating layer includes a first material 101, which is a hollow nanofiber, and a second material used along with the first material. The second material includes a carbon-based material 100 or LTO 103.

The active particles refer to particles having a specific shape (spherical shape, tube shape, etc.) and including an optional material possibly absorb/release the lithium ions. For example, the active particle may be selected from the group consisting of silicon, silicon oxide, a metal, a metal oxide and a mixture thereof, and the metal may be at least one selected from the group consisting of Sn, Al, Pb, Zn, Bi, In, Mg, Ga, Cd, Ag, Pt, Pd, Ir, Rh, Ru, Ni, Mo, Cr, Cu, Ti, W, Co, V and Ge.

For example, the active particle may be silicon. In this case, the anode active material may have a silicon (core)-(hollow nanofiber + carbon-based compound) (coating layer) structure, or a silicon (core)-(hollow nanofiber + LTO) (coating layer) structure. The hollow nanofiber 101 preferably is a carbon material having a nano size and pores and may include a single-wall carbon nanotube, a multi-wall carbon nanotube, a carbon nanofiber, graphene or a mixture thereof. However, the scope of the present invention is not limited to these examples but includes all kinds of optional fibers having a structure possibly providing the moving passage of the lithium ions (for example, pore or channel).

The carbon precursor of the second material may include at least one of glucose, sucrose, polyethylene glycol, polyvinyl alcohol, polyvinyl chloride and citric acid and may preferably include the glucose, the sucrose and the citric acid. The carbon precursor may be any material that may undergo a first reaction step with the hollow nanofiber and then may be uniformly coated on the surface of the anode active material 102. In example embodiments, the carbon precursor may be coated on the surface of the active particles such as silicon, and a portion of carbon and oxygen included in the carbon precursor may be transformed and evaporated into carbon dioxide and carbon monoxide during performing a subsequent heat treatment (calcining process). At last, only the carbon remains on the surface of the active material. An example of the reaction is as follows.

[Chemical Formula 1] C₆H₈O₇•H₂O = 3CO + 5H₂O + 3C

An amount of the second material 100, that is, the carbon precursor or the LTO, is preferably in a range of 5 to 50 wt% based on the anode active material, is more preferably in a range of 10 to 40 wt%, and is most preferably in a range of 20 to 30 wt%. When the amount of the carbon precursor or the LTO is less than 5 wt%, the stability of the anode active material and the lifetime of the battery may be decreased, and when the amount exceeds 50 wt%, the energy density and the tap density may be decreased.

The lithium salt in the precursor 100 for preparing the LTO may include an acetate compound, a nitrate compound, a sulfate compound, a carbonate compound, a hydroxide compound and a phosphate compound such as lithium phosphate (Li₃PO₄) , etc. In addition, the titanium salt for preparing the LTO may include a bis(ammonium lactate)dihydroxide compound, a boride compound, a bromide compound, a butoxide compound, a tert-butoxide compound, a chloride compound, a chloride tetrahydrofuran compound, a diisopropoxide bis(acetyacetonate) compound, an ethoxide compound, an ethylhexyloxide compound, a fluoride compound, a hydride compound, an iodide compound, an isopropoxide compound, a methoxide compound, an oxysulfate compound, a propoxide compound, a sulfate compound, etc. All kinds of commercially available salts may be used without specific limitation.

In order to solve another object of the present invention, a method for preparing an anode active material for a lithium secondary battery is provided. The method includes a first step of mixing an active particle such as the silicon, tin dioxide, silicon oxide, a metal oxide including the same, a metal compound, a first material of a hollow nanofiber and a second material of an LTO precursor or a carbon-based material and reacting these materials; and a second step of drying the reaction product from the first step and heat treating at a temperature range of 300°C to 1,000°C.

The preparation method will be described in more detail below.

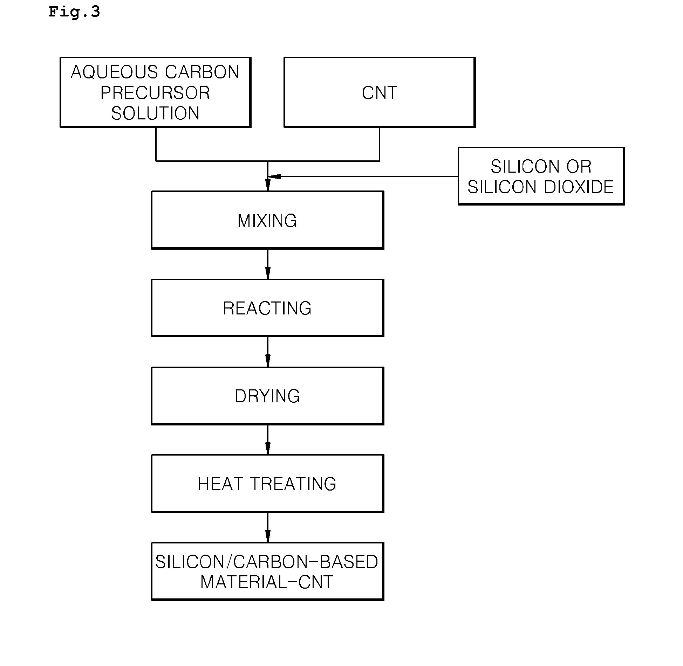

FIG. 3 is a flow chart illustrating a method for preparing an anode active material using the carbon-based material as the second material.

Referring to FIG. 3, a carbon nanotube of a hollow nanofiber type carbon material is dispersed as a first material of a coating layer into an aqueous carbon precursor solution of the second material of the coating layer. The amount of the hollow nanofiber type carbon is preferably 0.5 to 8 wt% based on the total amount of the dispersion. When the amount of the carbon is less than 0.5 wt%, the movement of the lithium ions may be limited, and when the amount of the carbon exceeds 8 wt%, a problem concerning a volume expansion due to heat may be generated. After that, an active material such as silicon or silicon oxide may be mixed and dispersed. That is, the carbon precursor is dissolved in a distilled water and then, the carbon nanotube as the hollow nanofiber type carbon material and the silicon or silicon dioxide as the active particle are continuously mixed. In this case, the mixing is conducted through a transporting manner of the mixture to a reactor by using a constant delivery pump.

After that, the reacting system in a reactor may be sufficiently stirred or may be undergo a sonochemical treatment using a sonic wave (sonochemistry) to obtain a silicon complex anode active material coated with the second material of the carbon precursor and the first material of the hollow nanofiber type carbon at the same time, or a silicon oxide complex anode active material coated with the carbon precursor and the hollow nanofiber type carbon at the same time. The kinds of the active particle may not be limited to the silicon or the silicon oxide, but various other metal or metal oxides may be used.

Preferably in this case, the temperature in the reactor is kept at 5°C to 70°C by using a circulation type constant-temperature bath, an operating frequency is kept to 28 kHz to 400 kHz, and intensity is kept to 100 W to 800 W. More preferably, the precipitation of a crystal may be even more advantageously processed through a multibubble sonoluminescence (MBSL) condition in accordance with example embodiments. In this case, the operating frequency is kept to 20 kHz to 300 kHz, the operating intensity is kept to 160 W to 600 W, and the temperature in the reactor is kept to 15°C to 35°C, and the reactor is constantly pressurized to 1 to 5 atm.

Further, an inert gas selected from the group consisting of a nitrogen gas, an argon gas and a combination thereof is preferably blown into the reactor. When the nitrogen gas and/or the argon gas is introduced into the reactor, the size of the obtained silicon complex anode active material coated with the carbon-based material and the hollow nanofiber type carbon at the same time, or the silicon dioxide complex anode active material coated with the carbon-based material and the hollow nanofiber type carbon at the same time, may be decreased. Accordingly, the tap density may be further increased. This effect is obtainable through a sonoluminescence phenomenon. This effect is obtained because the reaction is performed at a high temperature under a high pressure obtained through the sonoluminescence phenomenon.

Thus obtained silicon complex anode active material coated with the carbon-based material and the hollow nanofiber type carbon at the same time has a mean particle diameter of 1 µm to 30 µm, more preferably has 1 µm to 10 µm, and most preferably has 1 µm to 5 µm. The mean diameter of the particle before the reaction (primary particle) is 5 nm to 400 nm, and the mean diameter of the particles after coating and calcining (secondary particle) is 1 µm to 30 µm degree. The preferred particle shape is spherical.

Referring to FIG. 3 again, the mixture may be dried and then calcined to obtain the silicon complex anode active material coated with the carbon-based material (carbon precursor) and the hollow nanofiber type carbon at the same time, or the silicon dioxide complex anode active material coated with the carbon-based material and the hollow nanofiber type carbon at the same time, appropriate as the anode active material of the high-capacity lithium secondary battery. The calcining may be performed under an inert gas atmosphere at a temperature range of 400°C to 800°C, preferably at 500°C to 700°C to suppress the growing of the particle diameter and to form a preferred structure. The inert gas atmosphere in a calcining furnace may be accomplished by blowing at least one gas selected from the group consisting of a nitrogen gas, an argon gas and a combination thereof. Thus obtained complex anode active material for the secondary battery may include the coating layer including the second material of the carbon-based material and the first material of the hollow nanofiber type carbon, and the active particle within the coating layer, as illustrated in FIG. 1.

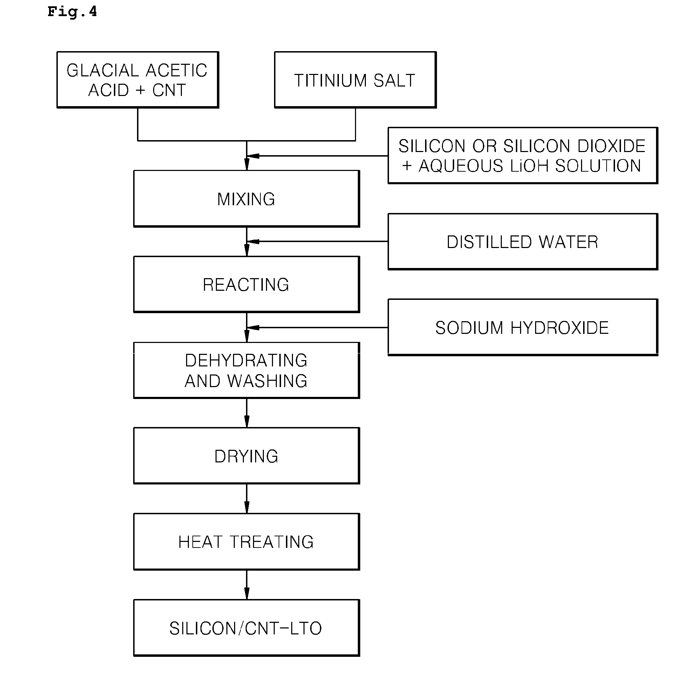

FIG. 4 is a flow chart illustrating a method for preparing an anode active material using the LTO as the first material in accordance with another example embodiment.

Referring to FIG. 4, carbon nanotube dispersed glacial acetic acid and a titanium salt, are mixed. Examples of the titanium salt applicable are as illustrated above. Then, silicon or silicon oxide as the active particle is added into the mixture and then mixed. Distilled water is added. After that, the first material and the second material are coated on the surface of the active particle. A drying process and a heat treating process are conducted. The condition of the heat treatment for calcining is as described above. Then, an anode active material having a core-coating layer structure of silicon (active particle)-carbon nanotube (CNT, first material)/LTO (second material) is produced.

In accordance with the method for preparing the complex anode active material for the lithium secondary battery, the complex anode active material having the above-described properties may be obtained with a good reproducibility and productivity.

According to example embodiments, a method of manufacturing a lithium secondary battery including the anode active material for the lithium secondary battery obtained by the above described method is provided.

The lithium secondary battery in accordance with example embodiments corresponds to a lithium battery including a cathode and anode, a separator disposed between the cathode and the anode and an electrolyte. The anode includes the active material. Accordingly, the lithium secondary battery in accordance with example embodiments illustrates better reproducibility, a good lifetime property, etc. than a common lithium secondary battery.

Hereinafter, the present invention will be described in more detail referring to Examples and a Comparative Example not corresponding to the present inventive concept. The scope of the present invention is not limited to the following Examples.

### Example 1

An aqueous H₂SiO₃ solution was prepared by substituting Na cation with H cation in an 1M aqueous Na₂SiO₃ solution by using a cation-exchange resin. Into the aqueous H₂SiO₃ solution, 3 wt% of hollow nanofiber type carbon (multi-wall carbon nanotube, MWCNT) was uniformly dispersed to obtain a dispersion. The dispersing of the hollow nanofiber type carbon was performed by using a sonic wave dispersing method and a high pressure dispersing method. Into the aqueous H₂SiO₃ solution, an aqueous sucrose solution and an aqueous citric acid solution were added and then stirred for 1 hour. After that, a reaction system in a reactor was sufficiently stirred at low speed or was treated using sonic wave (sonochemistry) for 1 hour. In this case, the temperature in the reactor was kept to 30°C by using a circulation type constant-temperature bath, an operating frequency was kept to 200 kHz and intensity was kept to 300 W. The reactor was constantly pressurized to 3 atm, and the inside of the reactor was filled with an argon gas. Then, the product was dried in a spray drier at 150°C. After drying, the product was calcined at 700°C to 1,100°C for 24 hours to obtain an anode active material including silicon/silicon oxide active particles and a coating layer of a hollow nanofiber including the CNT and the carbon precursor (sucrose).

### Example 2

The same procedure as described in Example 1 was performed, except that TiO₂ and LiOH were added to prepare LTO instead of the aqueous sucrose solution and the aqueous citric acid solution.

### Comparative Example 1

The same procedure as described in Example 1 was performed, except for excluding the sucrose, the citric acid and the carbon nanotube (CNT).

### Experiment 1

### FE-SEM

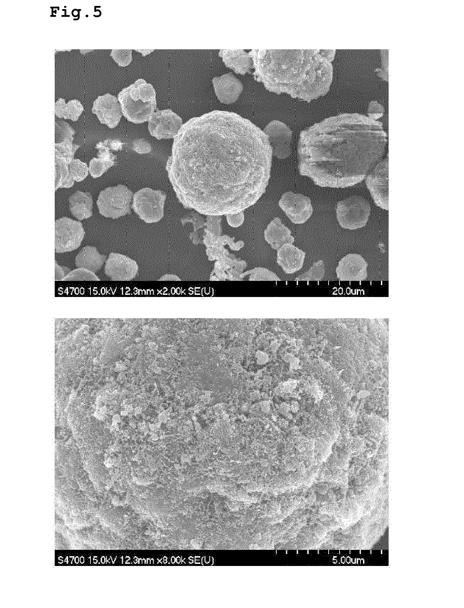

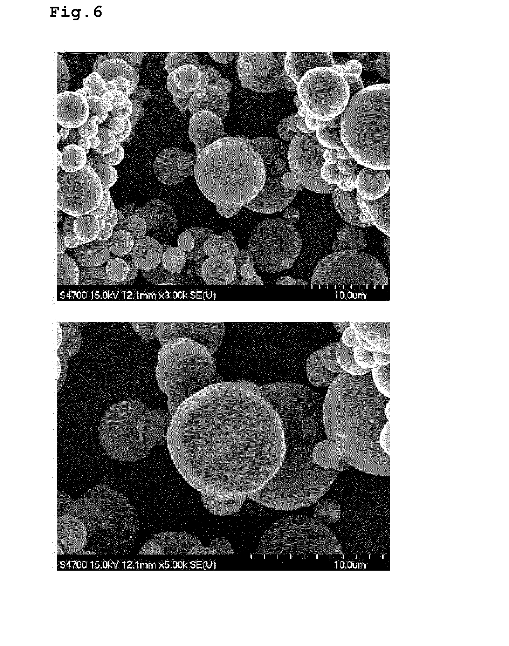

The particle shapes of the anode active materials obtained from the above Examples were observed by means of a field emission scanning electron microscope (FE-SEM). The results are illustrated in FIGS. 5 and 6.

Referring to FIGS. 5 and 6, it may be confirmed that CNT are uniformly dispersed on the particles of the anode active material, and the particle mean size is about 10 micrometers.

### Experiment 3

### Analysis on particle size

The particle sizes of the samples were analyzed by using a particle size distribution analyzer of a laser diffraction type. The particle size was confirmed when the accumulated volume reached to 10%, 50% and 90% from the result of particle size distribution and was designated by d10, d50 and d90, respectively. The results are illustrated in the following Table 1.

**Table 1**

| Sample | | Particle size (µm) | Tap density (g/cc) |
|---|---|---|---|
| Example 1 | d10 | 5.6 | 1.5 |
| | D50 | 11.2 | |
| | D90 | 15.3 | |
| Example 2 | d10 | 5.3 | 1.6 |
| | D50 | 10.2 | |
| | D90 | 15.0 | |
| Example 3 | d10 | 4.9 | 1.8 |
| | D50 | 9.0 | |
| | D90 | 13.9 | |

### Experiment 4

### Tap density

The tap density was calculated by adding 50g of a sample in a cylinder and then measuring the volume after 2,000 times of taps. The results are illustrated in the above Table 1.

Referring to the results in Table 1, the tap density decreased as the carbon material and the CNT was included in the anode active material. However, the battery performance was improved when the carbon material and the CNT was included from a battery evaluation.

### Experiment 5

### Battery evaluation

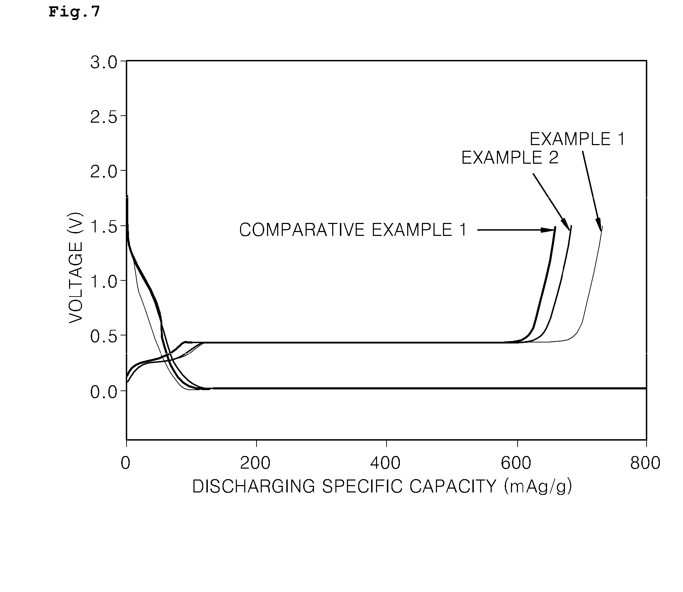

Anode active material : conductive material : binder were weighted in a ratio of 80 : 12 : 8 by weight. Mixed material was made to a slurry and then was coated on an aluminum thin film. After that, a drying was performed at 120°C for 8 hours to manufacture an electrode plate, and the electrode plate was pressed. A Li metal was used as an anode, and a 2030 type coin cell was manufactured. 1M-LiPF₆ dissolved in EC-DEC (1:1 by volume ratio) was used as an electrolyte. Charging/discharging was performed with a charging condition of 1.5V and a discharging condition of 0.02V. The results are illustrated in FIG. 7.

Referring to FIG. 7, an anode active material including the carbon material and the CNT simultaneously, is found to illustrate an excellent specific discharging capacity.

## Claims

1. An anode active material for a lithium secondary battery, the active material comprising:
active particles for absorbing/releasing a lithium ion; and
a coating layer coated on a surface of the active particles, the coating layer comprising a first material of a hollow nanofiber and a second material of a carbon precursor or lithium titanium oxide (LTO).

2. The anode active material for a lithium secondary battery according to claim 1, wherein the active particle is one selected from the group consisting of silicon, silicon oxide, a metal, a metal oxide and a mixture thereof, the metal being at least one selected from the group consisting of Sn, Al, Pb, Zn, Bi, In, Mg, Ga, Cd, Ag, Pt, Pd, Ir, Rh, Ru, Ni, Mo, Cr, Cu, Ti, W, Co, V and Ge.

3. The anode active material for a lithium secondary battery according to claim 1, wherein the hollow nanofiber is hollow nanofiber type carbon, and one of a single-wall carbon nanotube, a multi-wall carbon nanotube, a carbon nanofiber, graphene and a mixture thereof.

4. The anode active material for a lithium secondary battery according to claim 1, wherein the carbon precursor is at least one of glucose, sucrose, polyethylene glycol, polyvinyl alcohol, polyvinyl chloride and citric acid, the carbon precursor preferably being at least one selected from the group consisting of the glucose, the sucrose and the citric acid.

5. The anode active material for a lithium secondary battery according to claim 3, wherein a diameter of the hollow nanofiber type carbon is 2 nm to 100 nm, and
wherein a complex anode active material coated with the second material of the carbon precursor or the LTO and the first material of the hollow nanofiber type carbon is a crystal having a mean diameter of a primary particle of 5 nm to 400 nm and a mean diameter of a secondary particle of 3 µm to 30 µm.

6. A method for preparing an anode active material for a lithium secondary battery comprising:
(a) preparing a dispersion by mixing and dispersing active particles for an anode active material, a carbon precursor and a hollow nanofiber type carbon in an aqueous solution; and
(b) uniformly coating a surface of the active particles with a coating layer including the hollow nanofiber type carbon and the carbon precursor by stirring a reaction system in a reactor or by applying a sonochemical treatment to the reaction system.

7. The method for preparing an anode active material for a lithium secondary battery according to claim 6, wherein the sonochemical treatment is performed under a multibubble sonoluminescence (MBSL) condition.

8. The method for preparing an anode active material for a lithium secondary battery according to claim 6, further comprising
drying thus obtained product after coating; and
calcining the dried product under an inert gas atmosphere to obtain a complex anode active material.

9. The method for preparing an anode active material for a lithium secondary battery according to claim 6, wherein an amount of the hollow nanofiber type carbon in the dispersion at step (a) is in a range of 0.5 to 8 wt% based on a total amount of the dispersion.

10. The method for preparing an anode active material for a lithium secondary battery according to claim 6, wherein the dispersing for preparing the dispersion at step (a) is performed by using one of a sonic wave dispersing method and a high pressure dispersion method.

11. The method for preparing an anode active material for a lithium secondary battery according to claim 7, wherein the coating at step (b) is performed under an inert gas atmosphere at a temperature range of 10°C to 50°C.

12. The method for preparing an anode active material for a lithium secondary battery according to claim 8, wherein the calcining is performed under an inert gas atmosphere at a temperature range of 500°C to 900°C.

13. A lithium secondary battery including an anode active material for a lithium secondary battery according to any one of claims 1 to 5.
